Europäisches Patentamt

European Patent Office

Office européen des brevets

(19)

(11) Veröffentlichungsnummer : **0 090 994**
**B1**

# (12) EUROPÄISCHE PATENTSCHRIFT

(45) Veröffentlichungstag der Patentschrift :
08.07.87

(51) Int. Cl.⁴ : $C\ 01\ F\ 7/02$

(21) Anmeldenummer : 83102758.6

(22) Anmeldetag : 21.03.83

(54) **Verfahren zur Herstellung von kugelförmiger Tonerde.**

(30) Priorität : 02.04.82 DE 3212249

(43) Veröffentlichungstag der Anmeldung :
12.10.83 Patentblatt 83/41

(45) Bekanntmachung des Hinweises auf die Patenter-
teilung : 08.07.87 Patentblatt 87/28

(84) Benannte Vertragsstaaten :
BE FR GB IT NL

(56) Entgegenhaltungen :
DE-A- 2 812 875
DE-B- 2 460 921
GB-A- 1 152 443
US-A- 4 116 882
US-A- 4 250 058

(73) Patentinhaber : Condea Chemie GmbH
Fritz-Staiger Strasse 15
D-2212 Brunsbüttel 1 (DE)

(72) Erfinder : Meyer, Arnold
Hohe Geest 1
D-2220 St. Michaelisdonn (DE)
Erfinder : Noweck, Klaus, Dr.
Berliner Strasse 226
D-2212 Brunsbüttel (DE)

(74) Vertreter : Schupfner, Gerhard D. et al
Müller, Schupfner & Gauger Karlstrasse 5 Postfach
14 27
D-2110 Buchholz/Nordheide (DE)

## Beschreibung

Die vorliegende Erfindung bezieht sich auf die Herstellung von kugelförmiger Tonerde durch Eintropfen eines Tonerdesols, welche aus Tonerdehydrat in einer wäßrigen verdünnten Säure durch intensives Rühren hergestellt wurde, in eine Formsäule, die im oberen Teil mit flüssigem Kohlenwasserstoff und im unteren Teil mit wäßrigem Ammoniak gefüllt ist, und Trocknung sowie Aktivierung der gebildeten kugelförmigen Teilchen.

Tonerde in Kugelform mit großer Oberfläche und Festigkeit wird bevorzugt als Katalysator oder Trägermaterial in einem ruhenden Materialbett eingesetzt. Die Kugelform der Tonerdeteilchen ermöglicht eine gleichmäßige Packung des Materialbettes, so daß Schwankungen im Druckabfall in der Schicht auf ein Minimum herabgesetzt sowie Kanalbildung des Einsatzstromes der Reaktionskomponenten im wesentlichen ausgeschlossen werden. Ebenso bietet die Kugelform erhebliche Vorteile im Fließ- oder Wirbelbett, wobei die physikalische Stabilität und Festigkeit der kugelförmigen Tonerdeteilchen eine noch größere Bedeutung spielen als beim ruhenden Materialbett.

Die kugelförmigen Tonerdeteilchen sollen insbesondere eine gleichmäßig hohe Festigkeit aufweisen, da das durch den Zerfall einzelner Teilchen entstehende feinteilige Material den Druckabfall im Bett übermäßig erhöht und insbesondere im ruhenden Materialbett durch unerwünschte Bewegung im Bett den Abrieb erhöht, was zu weiteren Verlusten an Katalysator- bzw. Trägersubstanz führt.

Kugelförmige Tonerdeteilchen von 0,8 bis 3,2 mm Durchmesser werden bevorzugt nach der sogenannten Öleintropfmethode gemäß US-A-2 620 314 hergestellt. Hierbei wird ein saures Tonerdehydrosol mit einem Geliermittel vermischt, welches als schwache Base wirkt und bei steigender Temperatur Ammoniak freisetzt. Dieses Gemisch wird in ein heißes Ölbad getropft. Als Öl wird in der Regel ein Formöl, und zwar wegen seiner hohen Grenzflächenspannung gegenüber Wasser bevorzugt leichtes Gasöl, verwendet. Jeder Tropfen des ölunlöslichen Tonerdehydrosol/Geliermittel-Gemischs zieht sich im Ölbad in dem Bestreben bei gegebenem Volumen eine Form mit möglichst geringer Oberfläche einzunehmen, zur Kugelform zusammen und sinkt durch die Schwerkraft bedingt zu Boden.

Durch die Temperatur des Ölbades bedingt tritt gleichzeitig eine Gelierung der kugelförmigen Tonerdeteilchen ein, wodurch eine zur weiteren Verarbeitung ausreichende Stabilität der Kugelform erzielt wird. Die kugelförmigen Teilchen werden sodann gealtert, und zwar üblicherweise im Formöl und anschließend in wäßriger Ammoniaklösung, mit Wasser gewaschen, getrocknet und in der Regel bei einer Temperatur zwischen etwa 425 und 750 °C in oxidierender Atmosphäre

calciniert.

Neuere Entwicklungen beschäftigen sich damit, nach dieser Öleintropfmethode kugelförmige Tonerde hoher Dichte, hoher Oberfläche und hoher Druckfestigkeit herzustellen. Gemäß DE-A-29 43 599 und DE-A-29 45 755 werden Hexamethylentetramin als Ammoniakvorläufer und ein saures Tonerdehydrosol unterhalb der Gelierungstemperatur miteinander vermischt, und das Gemisch in ein heißes Ölbad getropft, wobei sich die Kugelform ausbildet und das Hexamethylentetramin sich unter Ammoniakbildung zersetzt. Der entstehende Ammoniak bewirkt die Gerinnung des Sols und die Erhärtung der Kugeln. Zur vollständigen Gerinnung wird dann noch bis zu 24 Stunden in einer wäßrigen ammoniakalischen Lösung mit einem Gehalt an Ammoniaksalzen gealtert. Anschließend wird dann noch gewaschen, getrocknet und calciniert. Hierbei resultieren Tonerdekugeln mit einer Festigkeit von bis zu etwa 100 N und gemäß dem Beispiel von DE-A-29 45 755 mittleren Schüttdichten je nach Ammoniumchloridkonzentration von 0,64 g/ml bei einer Oberfläche von 206 m$^2$/g bis zu 0,705 g/ml bei einer Oberfläche von 179 m$^2$/g. Besonders hohe Schüttdichten werden somit nur bei herabgesetzten Oberflächen erzielt und umgekehrt.

Gemäß US-A-4 116 882 wird eine Aluminiumoxidaufschlämmung, die durch Hydrolyse von Aluminiumalkoxiden hergestellt wurde, mit Essigsäure, Ameisensäure oder Salpetersäure geliert, bis eine Viskosität der Aufschlämmung von etwa 200 bis etwa 60 cP erreicht ist, und dann erst in eine Säule eingetropft, die ein Kohlenwasserstofföl mit einer Bodenschicht aus wäßriger Ammoniaklösung enthält. Nach diesem Verfahren werden Aufschlämmungen mit einem Feststoffgehalt von nur 10 bis 20 % Aluminiumoxid eingesetzt. Aufschlämmungen höherer Konzentration sind nicht zu verwenden, da sich dann Gele bilden und keine tropffähigen Dispersionen herstellbar sind. Bedingt durch den niedrigen Feststoffgehalt tritt bei der Trocknung der kugelförmigen Teilchen eine erhebliche Schrumpfung ein. Es entstehen Spannungsrisse, welche die mechanische Stabilität der Kugel erheblich herabsetzen.

Aus DE-A-28 12 875 ist ein Verfahren zur Herstellung kugelförmiger Tonerde bekannt, wobei ein Tonerdesol aus einer Böhmit/Pseudoböhmit-Zwischenform in einer wäßrigen verdünnten Säure durch intensives Rühren hergestellt wird, das erhaltene Tonerdesol in einer Formsäule, welche im oberen Teil mit einem flüssigen Kohlenwasserstoff und im unteren Teil mit wäßriger Ammoniaklösung gefüllt ist, eingetropft wird und die gebildeten kugelförmigen Teilchen getrocknet und aktiviert werden.

Ausgehend vom Stand der Technik liegt der vorliegenden Erfindung die Aufgabe zugrunde, ein verbessertes und vereinfachtes Verfahren zur Herstellung von kugelförmigen Tonerdeteilchen nach der Öleintropfmethode bereitzustellen, mit welcher kugelförmige Tonerdeteilchen hoher Festigkeit bzw. bei üblicher Festigkeit hohem Porenvolumen und im wesentlichen frei von Spannungsrissen erhalten werden.

Diese Aufgabe wird erfindungsgemäß gelöst durch ein Verfahren, das dadurch gekennzeichnet ist, daß als Tonerdehydrat Böhmit/Pseudoböhmit im Verhältnis von 10 bis 40 zu 90 bis 60 Gew.-% eingesetzt und Tonerdesol mit einem Feststoffgehalt von mehr als 20 bis zu 40 Gew.-% hergestellt wird, dem Tonerdesol 1 bis 10 Gew.-% Harnstoff zugegeben werden und das Tonerdesol sodann in die Formsäule bei einer Temperatur von 10 bis 40 °C eingetropft wird. Bevorzugt wird bei der Durchführung des erfindungsgemäßen Verfahrens die Formsäule bei Raumtemperatur gehalten.

Gegebenenfalls können die gebildeten kugelförmigen Teilchen noch gealtert werden.

Zur Herstellung des Tonerdesols werden erfindungsgemäß Tonerdehydrate aus der Hydrolyse von Aluminiumalkoholaten verwendet, mit Böhmit- und mikrokristallinen Pseudoböhmit-Anteilen, und zwar solche, die 10 bis 40 Gew.-%, insbesondere 20 bis 30 Gew.-% Böhmittonerde mit einer spezifischen Oberfläche von 140 bis 200 m²/g vorzugsweise etwa 150 bis 180 m²/g, und insbesondere einer Primärkristallitgröße von 60 bis 65 Å (gemessen am 020 Reflex), und 90 bis 60 Gew.-%, insbesondere 80 bis 70 Gew.-% mikrokristallinem Pseudoböhmit, mit einer spezifischen Oberfläche von 200 bis 300, vorzugsweise 230 bis 270 m²/g, und insbesondere einer Primärkristallitgröße von 35 bis 40 Å (gemessen am 020 Reflex), enthalten. Solche Tonerdehydrate sind unter der Bezeichnung Pural ® SB 70 im Handel, Hersteller Condea Chemie GmbH, Brunsbüttel.

Das Tonerdehydrat wird mittels verdünnter Säure einer Konzentration von etwa 1 bis 5 %, vorzugsweise 1 bis 3 % oder Gemische solcher Säuren in eine Dispersion übergeführt, wobei wie beim Stand der Technik insbesondere Salpetersäure, Salzsäure, Essigsäure, Ameisensäure allein oder in Gemischen miteinander eingesetzt werden. Das Gewichtsverhältnis von Tonerde zu Säure soll 1 zu 0,1 bis 0,02, insbesondere etwa 1 zu 0,04 (bezogen auf 100 %ige Säure) betragen.

Die Füllung der Formsäule besteht wie beim Stand der Technik aus 50 bis 90 Vol.-% wäßriger $NH_3$-Lösung einer Konzentration von 1 bis 10 % $NH_3$, vorzugsweise 5 bis 9 %, insbesondere etwa 8 %, und 10 bis 50 Vol.-% eines Kohlenwasserstofföls wie Dieselöl, Gasöl und Kerosin.

Das Tonerdesol mit einem Tonerdegehalt von mehr als 20 % $Al_2O_3$, insbesondere 25 % und höher wird durch kalibrierte Öffnungen in die Formsäule getropft, wobei die Temperatur der Säulenfüllung 10 bis 40 °C, vorzugsweise 20 bis 25 °C beträgt.

Dem Tonerdesol werden 1 bis 10 Gew.-%, bezogen auf das Solgesamtgewicht, Harnstoff und insbesondere 3 bis 5 Gew.-% Harnstoff zugesetzt. Das Tonerdesol kann auch in Gegenwart entsprechender Mengen Harnstoff hergestellt werden. Die Zugabe von Harnstoff dient nicht der Gelierung, sondern der Stabilisierung und somit zur Verlängerung der Verarbeitbarkeit der Dispersion. Vom Stand der Technik üblicherweise zugesetzte Ammoniakvorläufer wie Ammoniumacetat oder Urotropin auch in Gemischen mit Harnstoff sind nicht einsetzbar.

Dem Tonerdesol können auch Kohlenwasserstoffe wie Gasöl, Kerosin sowie geeignete Emulgatoren wie Alkoholethoxilate zugesetzt werden. Hierdurch werden Porosität und Oberfläche der Kugeln gesteigert. Hierbei hat sich gezeigt, daß die Kugeleigenschaften in gewissem Maße auch vom HLB-Wert des Emulgators beeinflußt werden, so daß nur solche Emulgatoren eingesetzt werden sollten, die die Kugeleigenschaften günstig beeinflussen.

Die kugelförmigen Tonerdeteilchen können gewaschen werden, etwa mit Petroläther, Hexan, Benzin. Ein Waschvorgang ist aber nicht unbedingt erforderlich.

Eine Alterungsphase der abgetrennten kugelförmigen Tonerdeteilchen kann vorgenommen werden, ist aber nicht erforderlich.

Die kugelförmigen Tonerdeteilchen werden getrocknet und aktiviert. Übliche Trocknungszeiten sind 1 bis 3 Stunden bei 90 bis 120 °C und 2 bis 24 Stunden bei 20 bis 60 °C, so beispielsweise 10 Stunden bei 60 °C und/oder 3 Stunden bei 120 °C. Die Aktivierung erfolgt etwa 1 bis 20 Stunden bei 480 bis 1 050 °C, vorzugsweise 1 bis 5 Stunden bei 500 bis 750 °C, beispielsweise 3 Stunden bei 550 °C.

Ein typisches Tonerdesol gemäß der vorliegenden Erfindung wird aus 35 Gew.-% Tonerdehydrat des Böhmit/Pseudoböhmit-Typs (Pural ® SB 70) und 65 Gew.-% 1,7 %iger Salpetersäure, der noch 5 Gew.-% Harnstoff zugefügt sind, zubereitet. Das erhaltene Gemisch wird zur Kugelbildung in eine Formsäule eingetropft, die zu 70 % des Volumens mit 8 %iger $NH_3$-Lösung und zu 15 % mit Gasöl gefüllt ist. Die erhaltenen Kugeln, die sich zunächst aufgrund der hohen Grenzflächenspannung des Öls gegenüber dem Sol in der oberen Phase ausbilden, sinken zum Boden der Säule ab und gelieren dabei in der Ammoniakphase. Sie können bis zu 20 Stunden in 8 %iger Ammoniaklösung gealtert werden. Sodann erfolgt eine Trocknung der erhaltenen Kugeln z. B. 10 Stunden bei 20 bis 60 °C oder 3 Stunden bei 120 °C. Anschließend wird bei 550 °C 3 Stunden aktiviert.

Die erhaltene kugelförmige Tonerde weist nach Aktivierung bei 550 °C und je nach Zugabe von Zuschlägen wie Kerosin und Emulgator eine Oberfläche von 220 bis 250 m²/g, eine Schüttdichte von 0,45 bis 0,75 g/ml und eine Bruchfestigkeit von bis zu 200 N/Kugel auf. Damit besitzt die hergestellte kugelförmige Tonerde eine sehr hohe mechanische Festigkeit gegenüber solcher nach dem Stand der Technik hergestellten kugelförmigen Tonerdeträger, wonach lediglich Festigkeiten bis etwa 100 N erhalten werden. Dies ist wohl u. a. darauf zurückzuführen, daß keine Spannungsrisse beim Trocknen entstehen.

Beispiel 1

100 g Tonerdehydrat, das zu 30 % aus Böhmit mit einer Primärkristallitgröße von 60 bis 65 Å (gemessen am 020 Reflex) und einer spezifischen Oberfläche von $180 \pm 20$ m²/g und zu 70 % aus mikrokristallinem Pseudoböhmit mit einer Primärkristallitgröße von 35 bis 40 Å (gemessen am 020 Reflex) und einer spezifischen Oberfläche von $250 \pm 20$ m²/g bestand, wurden in 170 g 1,7 %ige Salpetersäure eingerührt. Die Salpetersäure enthielt noch 15 g Harnstoff.

Nach 10-minütigem Rühren wurde das Sol in Tropfen von 4 bis 5 mm Durchmesser in eine Formsäule von 1 m Länge bei 20 bis 25 °C eingetragen. Die Formsäule war zu 70 % mit 8 %iger Ammoniaklösung, der noch 0,1 % Netzmittel, nämlich Alfol 610-4,5 EO, zugesetzt waren, und zu 15 % mit Gasöl gefüllt. Die aus der Formsäule ausgetragenen feuchten Kugeln wurden 10 Stunden bei 60 °C vorgetrocknet, 3 Stunden bei 120 °C getrocknet und anschließend 3 Stunden bei 550 °C aktiviert. Die so erhaltenen Kugeln wiesen folgende Daten auf:

| | |
|---|---|
| Durchmesser | 2-3 mm |
| Bruchhärte | 150 N/Kugel |
| Spez. Oberfläche | 220 m²/g |
| Porenvolumen | 0,45 ml/g |
| Schüttdichte | 0,66 g/ml |
| Spannungsrisse | keine |
| Abrieb | stabil |

Die Tonerde der Kugel lag zu 100 % in der Gamma-Phase vor. Die Tropffähigkeit des Soles betrug mindestens 5 Stunden.

Beispiel 2

Durchführung wie Beispiel 1. Es wurde jedoch kein Harnstoff zugefügt. Die Tropffähigkeit des Soles betrug nur 5 Minuten, weshalb mit diesem Sol nur einige wenige Kugeln herstellbar waren, deren Daten mit den in Beispiel 1 genannten übereinstimmen.

Beispiel 3

Durchführung wie Beispiel 1. Das Tonerdehydrat bestand jedoch zu 100 % aus mikrokristallinem Pseudoböhmit wie in Beispiel 1 beschrieben. Die Tropffähigkeit des Soles betrug nur 5 Minuten. Anschließend bildete sich ein Gel, das sich nicht zu Kugeln weiterverarbeiten ließ.

Beispiel 4

Durchführung wie in Beispiel 3. Es wurden jedoch nur 60 g Tonerdehydrat in 175 g 1,7 %ige Salpetersäure, die 15 g Harnstoff enthielt, eingerührt. Das Sol wies nun eine mindestens 5-stündige Tropffähigkeit auf. Die Kugeln zeigten zwar ähnliche Daten wie in Beispiel 1. Die Festigkeit betrug jedoch nur ca. 80 N/Kugel. Die Kugeln wiesen Spannungsrisse auf, waren in Wasser nur teilweise beständig und hatten keine gleichmäßig runde Form.

Beispiel 5

Durchführung wie in Beispiel 1. Es wurden dem Sol jedoch 28 g Kerosin und 3 g Emulgator (Alfol 1016-3 EO, $C_{10}$-$C_{16}$-Alkoholäthoxylat) zugefügt. Die Kugeln wiesen folgende Daten auf:

| | |
|---|---|
| Durchmesser | 2-3 mm |
| Bruchhärte | 40 N/Kugel |
| Porenvolumen | 0,68 ml/g |
| Schüttdichte | 0,49 g/ml |
| Spez. Oberfläche | 242 m²/g |
| Spannungsrisse | keine |

Beispiel 6

Durchführung wie in Beispiel 5. Dem Sol wurden jedoch nur 14 g Kerosin und 1,5 g Emulgator (Alfol 1016-3 EO) zugefügt. Die Kugeln wiesen folgende Daten auf:

| | |
|---|---|
| Durchmesser | 2-3 mm |
| Bruchhärte | 120 N/Kugel |
| Porenvolumen | 0,55 ml/g |
| Schüttdichte | 0,58 g/ml |
| Spez. Oberfläche | 250 m²/g |
| Spannungsrisse | keine |

**Patentansprüche**

1. Verfahren zur Herstellung kugelförmiger Tonerde durch Eintropfen eines Tonerdesols, welches aus Tonerdehydrat in einer wäßrigen verdünnten Säure durch intensives Rühren hergestellt wurde, in eine Formsäule, die im oberen Teil mit flüssigem Kohlenwasserstoff und im unteren Teil mit wäßrigem Ammoniak gefüllt ist, und Trocknung sowie Aktivierung der gebildeten kugelförmigen Teilchen, dadurch gekennzeichnet, daß als Tonerdehydrat Böhmit/Pseudoböhmit im Verhältnis von 10 bis 40 zu 90 bis 60 Gew.-% eingesetzt und Tonerdesol mit einem Feststoffgehalt von mehr als 20 bis zu 40 Gew.-% hergestellt wird, dem Tonerdesol 1 bis 10 Gew.-% Harnstoff zugegeben werden und das Tonerdesol sodann in die Formsäule bei einer Temperatur von 10 bis 40 °C eingetropft wird.

2. Verfahren nach Anspruch 1, dadurch gekennzeichnet, daß das Tonerdesol in Gegenwart des Harnstoffs hergestellt wird.

3. Verfahren nach einem der vorhergehenden Ansprüche, dadurch gekennzeichnet, daß dem Tonerdesol Kohlenwasserstoffe, insbesondere Kerosin oder Gasöl, und Emulgatoren zugesetzt werden.

4. Verfahren nach einem der vorhergehenden Ansprüche, dadurch gekennzeichnet, daß als wäßrige verdünnte Säure Salpetersäure, Essigsäure, Ameisensäure oder Gemische davon eingesetzt werden.

## Claims

1. Process for producing spheroidal alumina by dropping an alumina sol into a forming column filled in its upper portion with liquid hydrocarbon and in its lower portion with aqueous ammonia, and drying as well as activating the thus formed spheroidal particles, the alumina sol being prepared from alumina hydrate in an aqueous dilute acid with intensive stirring, characterized in that as alumina hydrate boehmite/pseudo-boehmite in the ratio of 10 to 40/90 to 60 weight percent is used and the alumina sol is prepared with a solids content greater than 20 and up to 40 percent, 1 to 10 percent by weight urea are added to the alumina sol, and then the alumina sol is dropped into the forming column at a temperature of 10 to 40 °C.

2. Process according to claim 1, characterized in that the alumina sol is prepared in the presence of the urea.

3. Process according to any of the proceeding claims, characterized in that hydrocarbons, especially kerosene or gas oil, and emulsifiers are added.

4. Process according to any of the proceeding claims characterized in that as aqueous dilute acid nitric acid, acetic acid, formic acid or mixtures thereof are used.

## Revendications

1. Procédé de production d'alumine sphérique par introduction goutte à goutte d'un sol d'alumine, qui a été produit à partir d'hydrate d'alumine par agitation intensive dans un acide dilué aqueux, dans une colonne de formage qui est chargée d'un hydrocarbure liquide à la partie supérieure et d'une solution aqueuse d'ammoniac à la partie inférieure, et séchage de même qu'activation des particules sphériques formées, caractérisé en ce qu'on utilise comme hydrate d'alumine un mélange de böhmite/pseudo-böhmite dans un rapport de 10-40 à 90-60 % en poids et un sol d'alumine ayant une teneur en matière solide de plus de 20 à 40 % en poids, on ajoute au sol d'alumine 1 à 10 % en poids d'urée, puis on verse le sol d'alumine goutte à goutte dans la colonne de formage à une température de 10 à 40 °C.

2. Procédé suivant la revendication 1, caractérisé en ce que le sol d'alumine est préparé en présence d'urée.

3. Procédé suivant l'une des revendications précédentes, caractérisé en ce qu'on ajoute au sol d'alumine des hydrocarbures, notamment du kérosène ou du gazole, et des émulsionnants.

4. Procédé suivant l'une des revendications précédentes, caractérisé en ce qu'on utilise comme acide dilué aqueux de l'acide nitrique, de l'acide acétique, de l'acide formique ou des mélanges de ces acides.